# EUROPÄISCHE PATENTSCHRIFT

(11) **EP 2 669 641 B1**
(45) Veröffentlichungstag und Bekanntmachung des Hinweises auf die Patenterteilung: **04.12.2019**
(21) Anmeldenummer: 13002503.4
(22) Anmeldetag: 13.05.2013
(51) Int. Cl.: G01F 15/14, G01F 1/84

(54) **Durchflussmessgerät**
Flow measuring device
Appareil de mesure de débit

(30) Priorität: 29.05.2012 DE 102012010430
(43) Veröffentlichungstag der Anmeldung: 04.12.2013
(60) Teilanmeldung: 14156603.4
(73) Patentinhaber: Krohne AG, 4019 Basel (CH)
(72) Erfinder: Hussain, Yousif Dr., Weston Favell, Northampton NN 3 3 DA (GB); Rolph, Christopher, Hartwell, Northants NN7 2 HA (GB)
(74) Vertreter: Gesthuysen Patent- und Rechtsanwälte

(56) Entgegenhaltungen:
- EP-A1- 1 710 545
- WO-A1-02/087993
- DE-A1- 1 909 232
- DE-A1- 10 206 089
- DE-A1-102006 013 601
- DE-U1-202008 005 092
- US-A1- 2003 075 542
- US-B1- 6 607 003
- Dichtstopfen Zum Luft-Und Rauchdichten Verschliessen ET AL: "Einfaches Verschliessen -Dauerhaft dicht", , 1 January 2011 (2011-01-01), XP055473221, Retrieved from the Internet: URL:http://www.agro.ch/website/media/agro_ pdf_neu/1040_Dichtstopfen_de.pdf [retrieved on 2018-05-07]

## Beschreibung

Die Erfindung betrifft ein Durchflussmessgerät, umfassend ein Gehäuse und mindestens ein Messrohr, wobei das Gehäuse ein Innenvolumen und mindestens eine Druckausgleichsöffnung aufweist, wobei das Innenvolumen das Messrohr zumindest teilweise umgibt, und wobei die Druckausgleichsöffnung mit einem Verschlussmittel verschlossen ist.

Durchflussmessgeräte sind in einer Vielzahl von Ausgestaltungen im Stand der Technik bekannt. Insbesondere bei solchen Durchflussmessgeräten, deren Messrohr ein Fluid führt, das unter erhöhtem Druck steht, können im Schadensfall, d.h. bei einer Beschädigung des Messrohrs, Beschädigungen am Gehäuse auftreten, wenn das Innenvolumen des Gehäuses mit dem unter Druck stehenden Fluid gefüllt wird. Derartige Gehäuse sind üblicherweise nicht druckfest ausgestaltet, da sie lediglich dem Schutz des Messrohrs und der Messeinrichtung vor Umgebungseinflüssen dienen. Geringe Überdrücke werden beispielsweise durch eine spaltartige Öffnung im Gehäuse ausgeglichen, die sich in Folge des inneren Überdrucks zwischen einzelnen Bauelementen des Gehäuses ausbildet. Bei schlagartigen Druckveränderungen kann es aber beispielsweise dazu kommen, dass das Gehäuse nennenswert beschädigt wird, indem sich Gehäuseteile vom Gehäuse entfernen. Dadurch entsteht eine erhebliche Verletzungsgefahr für umstehende Personen.

Um derartige Beschädigungen des Gehäuses zu vermeiden und die Sicherheit zu erhöhen, sind im Stand der Technik Gehäuse für Durchflussmessgeräte bekannt, die über eine Druckausgleichsöffnung verfügen, um im Schadfall im Gehäuse entstehenden Druck gezielt entweichen zu lassen. Die DE 10 2006 013 601 offenbart beispielsweise einen Messaufnehmer vom Vibrationstyp, der über ein Gehäuse und ein teilweise innerhalb des Gehäuse verlaufendes Messrohr verfügt. Das Gehäuse ist fluiddicht ausgestaltet, und das Messrohr ist einlassseitig und auslassseitig dichtend durch die jeweiligen Gehäusewände hindurchgeführt. Um im Gehäuse auftretende ungewollte Überdrücke gezielt auszugleichen, weist das Gehäuse eine Druckausgleichsöffnung aus, über die das Fluid aus dem Gehäuse entweichen kann. Diese Druckausgleichsöffnung ist mit einer Berstscheibe oder mittels eines Überdruckventils verschlossen. Die aus dem Stand der Technik bekannten Durchflussmessgeräte mit einem Gehäuse, das über eine Druckausgleichsöffnung verfügt, weisen allerdings den Nachteil auf, dass die Druckausgleichsöffnungen mit sehr komplexen Verschlussmitteln, beispielsweise Berstscheiben oder Überdruckventilen, verschlossen sind, wodurch der Montage- und Wartungsaufwand des Durchflussmessgeräts sehr hoch ist.

Der vorliegenden Erfindung liegt ausgehend vom vorgenannten Stand der Technik die Aufgabe zugrunde, ein Durchflussmessgerät mit einer Druckausgleichsöffnung anzugeben, bei dem der Montage- und Wartungsaufwand reduziert ist.

Die vorgenannte Aufgabe ist bei einem gattungsgemäßen Durchflussmessgerät zunächst und im Wesentlichen dadurch gelöst, dass zwischen dem Verschlussmittel und dem Gehäuse eine Verbindung ausgebildet ist, und dass die Verbindung durch die Wirkung eines Innendrucks im Innenvolumen auf das Verschlussmittel bei Erreichen eines vorbestimmten Innendruckschwellenwertes auftrennbar ist, so dass das Verschlussmittel vom Gehäuse gelöst wird. Vorzugsweise handelt es sich bei dem Durchflussmessgerät um ein Coriolis-Massedurchflussmessgerät mit mindestens einem Messrohr, bevorzugt mindestens zwei oder mindestens vier Messrohren, die teilweise von dem Gehäuse umschlossen sind. Das unter Druck stehende Fluid ist im Betriebszustand innerhalb der Messrohre geführt. Das Gehäuse weist ein geschlossenes Innenvolumen auf, das die Messrohre teilweise umgibt. Im Innenvolumen des Gehäuses herrscht im Betriebszustand Normaldruck oder wahlweise geringfügiger Unterdruck. Die Druckausgleichsöffnung verbindet das Innenvolumen des Gehäuses mit der Umgebung des Durchflussmessgeräts.

Im Schadensfall tritt das Fluid aus den Messrohren in das Innenvolumen des Gehäuses ein, wodurch im Innenvolumen des Gehäuses ein Innendruck entsteht. Das Gehäuse des Durchflussmessgeräts, insbesondere des Coriolis-Massedurchflussmessgeräts, weist zum Ausgleich eines inneren Überdrucks eine Druckausgleichsöffnung auf, die mit einem Verschlussmittel verschlossen ist. Das Verschlussmittel verhindert, dass Schmutz und/oder Feuchtigkeit von außerhalb in das Innenvolumen des Gehäuses des Durchflussmessgeräts eindringen.

Zwischen dem Verschlussmittel und dem Gehäuse, insbesondere der Druckausgleichsöffnung, ist eine Verbindung ausgebildet, die durch die Wirkung des Innendrucks auf das Verschlussmittel bei Erreichen eines bestimmten Innendruckschwellwertes auftrennbar ist. Bei Erreichen eines vorbestimmten Innendruckschwellwertes wird die Verbindung zwischen Verschlussmittel und dem Gehäuse folglich aufgetrennt, wodurch das Verschlussmittel vom Gehäuse gelöst wird. Somit ist das Verschlussmittel derart an dem Gehäuse, insbesondere der Druckausgleichsöffnung angeordnet, dass sich das Verschlussmittel durch die Wirkung des Innendrucks im Gehäuse von dem Gehäuse ablöst, sobald der Innendruck einen vorbestimmten Wert erreicht, insbesondere einen vorbestimmten Wert überschreitet. Das Verschlussmittel wird dabei zerstörungsfrei von dem Gehäuse gelöst, indem lediglich die Verbindung zwischen Verschlussmittel und dem Gehäuse, insbesondere der Druckausgleichsöffnung, auftrennt wird. Das Verschlussmittel selbst wird bei Auftrennen der Verbindung nicht beschädigt, so dass es einstückig vom Gehäuse abgelöst wird und sich insbesondere vom Gehäuse entfernt. Die Verbindung zwischen Verschlussmittel und dem Gehäuse ist folglich schwächer ausgebildet als der innere Zusammenhalt des Verschlussmittels selbst, so dass stets die Verbindung aufgetrennt wird, bevor das Verschlussmittel zerstört würde. Vorteilhaft ist die Druckausgleichsöffnung auf einer im Montagezustand nach oben gerichteten Oberfläche des Gehäuses angeordnet, so dass sich beispielsweise im Schadensfall das Verschlussmittel nach oben entfernt. Vorzugsweise ist das Ablösen des Verschlussmittels irreversibel, so dass das gleiche Verschlussmittel die Druckausgleichsöffnung nach dem Ablösen nicht ein zweites Mal verschließen kann.

Das erfindungsgemäße Durchflussmessgerät weist den Vorteil auf, dass auf einfache Weise eine kompakte Drucksicherung für ein im normalen Betriebszustand unter Normaldruck stehendes Gehäuse erreicht werden kann, indem ein Verschlussmittel durch den Innendruck von dem Gehäuse abgelöst wird und eine Druckausgleichsöffnung frei wird, wenn der Innendruck einen vorbestimmten Innendruckschwellwert erreicht bzw. überschreitet. Durch diesen einfachen Aufbau wird der Montage- und Wartungsaufwand für das Durchflussmessgerät reduziert. Zum Ablösen des Verschlussmittels, insbesondere zum Auftrennen der Verbindung zwischen dem Verschlussmittel und dem Gehäuse, muss die Kraft, die aus dem auf die Fläche des Verschlussmittels wirkenden Innendruck resultiert, größer sein als die Kraft, die Haltekraft der Verbindung, folglich ist die Haltekraft der Verbindung geringer als die aus dem Innendruck auf die Fläche des Verschlussmittels resultierende Kraft. Die relevante Fläche des Verschlussmittels ist dabei stets die Fläche des Verschlussmittels, die mit dem Innendruck beaufschlagt wird, vorzugsweise die Fläche der Druckausgleichsöffnung. Bei gleichem Innendruck ist somit die auf das Verschlussmittel wirkende Kraft größer, wenn die Fläche des Verschlussmittels, auf die der Innendruck wirken kann, größer ist. Auf einfache Weise lässt sich daher erschließen, dass der Innendruckschwellenwert, bei dem sich die Verbindung zwischen Verschlussmittel und Gehäuse auftrennt wird, dadurch eingestellt wird, dass die Haltekraft bzw. die Stärke der Verbindung zwischen Verschlussmittel und dem Gehäuse und/oder die relevante Fläche des Verschlussmittels festgelegt bzw. variiert wird.

Die Verbindung zwischen dem Verschlussmittel und dem Gehäuse weist eine ausreichende Haltekraft auf, um geringfügige Druckschwankungen, beispielsweise hervorgerufen durch Temperaturänderungen, beschädigungsfrei zu überstehen. Das Verschlussmittel ist beispielsweise aus einem Metall, einem Gummi, einem Silikon oder einem Kunststoff hergestellt, insbesondere einem Polyester oder einem Polycarbonat.

Das Durchflussmessgerät lässt sich insbesondere auf einfache Weise herstellen, wenn gemäß einer ersten Ausgestaltung vorgesehen ist, dass die Verbindung zumindest teilweise als stoffschlüssige Verbindung ausgestaltet ist, bevorzugt die Verbindung zumindest teilweise mit einem Haftmittel realisiert ist, so dass das Haftmittel bei einem vorbestimmten Innendruckschwellwert zumindest teilweise zerstört wird. Das Verschlussmittel ist folglich stoffschlüssig mit dem Gehäuse verbunden, wobei die stoffschlüssige Verbindung durch die Wirkung des Innendrucks auf das Verschlussmittels bei Erreichen eines vorbestimmten Innendruckschwellenwertes aufgetrennt wird, so dass sich das Verschlussmittel vom Gehäuse löst. Beispielsweise besteht das Verschlussmittel aus einem Kunststoff, der auf die Druckausgleichsöffnung zumindest teilweise im pastösen Zustand aufgebracht wird, dann aushärtet und dabei mit der Oberfläche des Gehäuses eine Verbindung aufbaut.

Bevorzugt ist die Verbindung zumindest teilweise mit einem Haftmittel realisiert, so dass das Haftmittel bei einem vorbestimmten Innendruckschwellenwertes zumindest teilweise zerstört wird. Das Verschlussmittel ist dazu mit dem Haftmittel an dem Gehäuse befestigt. Als Haftmittel sind eine Vielzahl von Klebstoffen, aber auch Löt- oder Schweißverbindungen denkbar, wobei bei vorliegen eines Innendruck im Gehäuse, der den Innendruckschwellenwert überschreitet, stets lediglich die Verbindung, also der Klebstoff, das Lot oder die Schweißnaht, beschädigt oder zerstört wird, so dass sich das Verschlussmittel stets einstückig zumindest teilweise vom Gehäuse des Durchflussmessgeräts ablöst.

Bei diesem Ausführungsbeispiel ist die Haftkraft - die Haltekraft - der Verbindung zwischen dem Verschlussmittel und dem Gehäuse, insbesondere zwischen dem Verschlussmittel und dem Haftmittel bzw. dem Haftmittel und dem Gehäuse, derart eingestellt, dass die Haftkraft geringfügig unterhalb der Kraft liegt, die bei dem gewünschten Innendruckschwellenwert aus dem jeweiligen Innendruck auf die Fläche des Verschlussmittels resultiert.

Das Einstellen der Kraft - folglich des Innendruckschwellenwertes, bei der ein Ablösen des Verschlussmittels von dem Gehäuse erfolgt, hat sich gemäß einer weiteren Ausgestaltung als vorteilhaft herausgestellt, wenn vorgesehen ist, dass die Verbindung zumindest teilweise als kraftschlüssige Verbindung ausgestaltet ist, bevorzugt das Verschlussmittel zumindest teilweise in der Druckausgleichsöffnung angeordnet ist, besonders bevorzugt vollständig in der Druckausgleichsöffnung angeordnet ist. Die Verbindung zwischen dem Verschlussmittel und dem Gehäuse ist zumindest teilweise als kraftschlüssige Verbindung ausgestaltet, was bedeutet, dass die Verbindung beispielsweise teilweise kraftschlüssig, als auch teilweise durch einen Stoffschluss erzeugt werden kann. Die Wahl der Mittel zur Erzeugung der Verbindung hängt von der gewünschten Haltekraft der Verbindung und damit auch von dem gewünschten Innendruckschwellenwert ab.

Bei einer kraftschlüssigen Verbindung ist vorzugsweise vorgesehen, dass die Haltekraft der Verbindung vorzugsweise etwas geringer ist, als die Kraft, die durch den Innendruck, bei Erreichen des Innendruckschwellenwertes, auf das Verschlussmittel bewirkt wird. Bevorzugt ist das Verschlussmittel zumindest teilweise in der Druckausgleichsöffnung angeordnet, so dass die Flächen der Druckausgleichsöffnung und des Verschlussmittels miteinander im Reibkontakt stehen. Sobald die durch den Innendruck erzeugte Kraft auf das Verschlussmittel die Haftreibung zwischen Verschlussmittel und der Druckausgleichsöffnung überwunden hat, rutscht das Verschlussmittel aus der Druckausgleichsöffnung heraus, was ein Auftrennen der Verbindung zwischen Verschlussmittel und dem Gehäuse bzw. ein Ablösen des Verschlussmittels vom Gehäuse bedeutet. Das Verschlussmittel weist dazu beispielsweise einen länglichen Grundkörper auf, der zumindest teilweise in der Druckausgleichsöffnung angeordnet ist, wobei in einem Endbereich des länglichen Grundkörpers ein Kopfbereich vorgesehen ist, dessen Durchmesser größer als der Durchmesser der Druckausgleichsöffnung ist, so dass der erweiterte Kopf des Verschlussmittels auf einer Oberfläche des Gehäuses aufliegt. Im Querschnitt hat das Verschlussmittel somit beispielsweise eine T-förmige Ausgestaltung.

Besonders bevorzugt ist das Verschlussmittel vollständig in der Druckausgleichsöffnung angeordnet, so dass das Verschlussmittel vollständig in der Druckausgleichsöffnung verschwindet und lediglich bei Überschreiten des Innendruckschwellenwertes durch die Wirkung des Innendrucks auf das Verschlussmittel aus der Druckausgleichsöffnung herausgepresst wird, wodurch das Verschlussmittel vom Gehäuse gelöst wird. Vorteilhaft ist das Verschlussmittel beispielsweise aus einem Gummi oder einem Silikon hergestellt, so dass das Verschlussmittel bei Einbringen des Verschlussmittels in die Druckausgleichsöffnung geringfügig komprimiert wird, so dass eine radiale Kraft entsteht, die die Abdichtung zwischen Verschlussmittel und Druckausgleichsöffnung verbessert.

Zur Beeinflussung der Verbindung ist gemäß einer weiteren Ausgestaltung vorgesehen, dass die Verbindung zumindest teilweise als formschlüssige Verbindung ausgestaltet ist, bevorzugt dass das Gehäuse einen Hinterschnitt aufweist, und dass das Verschlussmittel zumindest teilweise von dem Hinterschnitt gehalten wird. Die Verbindung zwischen Verschlussmittel und dem Gehäuse ist folglich zumindest teilweise als formschlüssige Verbindung ausgestaltet, so dass das Verschlussmittel die Druckausgleichsöffnung verschließend gehalten wird, solange die formschlüssige Haltekraft der Verbindung größer ist als die durch den oberhalb des Innendruckschwellenwertes befindlichen Innendruck auf das Verschlussmittel bewirkte Kraft. Beispielsweise ist das Verschlussmittel dazu mit einer Klammer die Druckausgleichsöffnung verschließend an dem Gehäuse des Durchflussmessgeräts gehalten.

Ferner ist erfindungsgemäss vorgesehen, dass das Gehäuse einen Hinterschnitt aufweist, und dass das Verschlussmittel zumindest teilweise von dem Hinterschnitt gehalten wird. Hierzu weist das Gehäuse im Bereich der Druckausgleichsöffnung einen Hinterschnitt auf, der dass Verschlussmittel zumindest teilweise umgreift oder übergreift, so dass wenn der Innendruck des Gehäuses den Innendruckschwellenwert erreicht, das Verschlussmittel flexibel verformt wird, wodurch es aus der Umgreifung des Hinterschnitts entweicht und die Druckausgleichsöffnung freigibt. Der Hinterschnitt ist beispielsweise einstückig mit dem Gehäuse ausgestaltet, es ist aber alternativ auch vorgesehen, dass der Hinterschnitt als separates Bauteil an dem Gehäuse gebildet ist.

Vorzugsweise besteht die Verbindung zwischen Verschlussmittel und dem Gehäuse aus einer Kombination aus stoffschlüssiger und/oder kraftschlüssiger und/oder formschlüssiger Verbindung, wobei die Anteile der Verbindungsarten in Abhängigkeit davon gewählt werden, wie die Haltekraft der Verbindung ausgestaltet werden soll, insbesondere welchen Wert der Innendruckschwellenwert aufweisen soll. Jede beliebige Kombination zwischen Anteilen einer stoffschlüssigen und/oder kraftschlüssigen und/oder formschlüssigen Verbindung ist denkbar.

Im Bezug auf die Anordnung des Verschlussmittels hat sich gemäß einer weiteren Ausgestaltung des Durchflussmessgeräts als vorteilhaft herausgestellt, wenn das Verschlussmittel zumindest teilweise auf einer Oberfläche des Gehäuses angeordnet ist. Vorzugsweise ist das Verschlussmittel vollständig auf einer Oberfläche angeordnet. Im Falle des Überschreitens des Innendruckschwellenwertes kann sich das Verschlussmittel dabei auf einfache Weise von der Oberfläche des Gehäuses ablösen, wodurch die Druckausgleichsöffnung freigegeben wird. Besonders bevorzugt ist das Verschlussmittel auf einer äußeren Oberfläche angeordnet, so dass das Verschlussmittel auf einfache Weise von dem Gehäuse des Durchflussmessgeräts durch den Innendruck ablösbar ist. Besonders bevorzugt ist eine stoffschlüssige Verbindung mittels eines Haftmittels, bei der bei Überschreiten des Innendruckschwellenwerts lediglich die Haftverbindung zwischen Verschlussmittel und dem Gehäuse aufgetrennt wird.

Es ist gemäß einer weiteren Ausgestaltung bevorzugt, wenn das Verschlussmittel auf einer Innenfläche des Gehäuses angeordnet ist, und das bei einem vorbestimmten Innendruckschwellenwert das Verschlussmittel flexibel durch die Druckausgleichsöffnung nach außen entweicht. Das Verschlussmittel ist dazu die Druckausgleichsöffnung verschließend auf der Innenseite an einer Innenfläche des Gehäuses angeordnet und ist aus einem Material hergestellt, dass es erlaubt, dass das Verschlussmittel bei Überschreiten eines vorbestimmten Innendruckschwellenwertes das Verschlussmittel von der Innenfläche des Gehäuses abgelöst wird und von dem Innendruck durch die Druckausgleichsöffnung aus dem Gehäuse herausgedrückt wird. Das Verschlussmittel weist dazu beispielsweise eine derartige Form auf, dass ein solches Herausdrücken sichergestellt ist. Eine solche Form sieht beispielsweise derart aus, dass das Verschlussmittel im Bereich der Druckausgleichsöffnung in die Druckausgleichsöffnung hineingewölbt ist. Das Material des Verschlussmittels ist ausreichend flexibel, um ein Ausweichen durch die Druckausgleichsöffnung zu ermöglichen.

Ein unbeabsichtigtes Ablösen des Verschlussmittels wird gemäß einer weiteren Ausgestaltung dadurch verhindert, dass in dem Gehäuse eine die Druckausgleichsöffnung umgebende Ausnehmung angeordnet ist, insbesondere dass das Verschlussmittel zumindest teilweise in der Ausnehmung angeordnet ist. Die Ausnehmung ist vorzugsweise in der äußeren Oberfläche des Gehäuses die Druckausgleichsöffnung umgebend angeordnet, so dass das Verschlussmittel derart in der Ausnehmung angeordnet werden kann, dass das Verschlussmittel zusammen mit der verbleibenden Oberfläche des Gehäuses eine ebene Fläche bildet. Dadurch wird verhindert, dass das Verschlussmittel beispielsweise unbeabsichtigt durch Untergreifen abgelöst werden kann.

Die Ausnehmung nimmt das Verschlussmittel vorzugsweise vollständig auf, wobei vorzugsweise die Innenkontur der Ausnehmung der Außenkontur des Verschlussmittels entspricht. Vorteilhaft ist auch, wenn ein Kopfbereich des Verschlussmittels beispielsweise in der Ausnehmung angeordnet ist, während ein sich an den Kopfbereich anschließender Bereich des Verschlussmittels in die Druckausgleichsöffnung hineinragt, so dass das Verschlussmittel eine Art Stopfen in der Druckausgleichsöffnung bildet, wobei ein manuelles Herauslösen des Verschlussmittels durch Untergreifen nicht möglich ist. Das Verschlussmittel wird lediglich durch den durch die Druckausgleichsöffnung auf das Verschlussmittel wirkenden Innendruck, insbesondere bei Überschreiten eines Innendruckschwellenwerts, aus der Druckausgleichsöffnung herausgedrückt bzw. von der Oberfläche des Gehäuses abgelöst, so dass die Druckausgleichsöffnung freigegeben wird.

Die Fläche der Druckausgleichsöffnung lässt sich gemäß einer weiteren Ausgestaltung dadurch variieren, dass eine Mehrzahl von Druckausgleichsöffnungen vorgesehen ist. Die Mehrzahl der Druckausgleichsöffnungen ist beispielsweise unmittelbar nebeneinander angeordnet, so dass die Gesamtfläche der Druckausgleichsöffnungen der Wirkfläche des Innendrucks auf das Verschlussmittel entspricht. Dabei ist beispielsweise vorgesehen, dass zwei, drei oder vier Druckausgleichsöffnungen vorgesehen sind, beispielsweise ist es aber auch vorgesehen, dass die Druckausgleichsöffnungen in einer derartigen Vielzahl vorhanden sind, dass die Druckausgleichsöffnungen in einem Bereich siebartig angeordnet sind. Eine solche Anordnung von Druckausgleichsöffnungen ist beispielsweise von einem Verschlussmittel flächig veschlossen.

Vorzugsweise ist gemäß einer weiteren Ausgestaltung vorgesehen, dass die Mehrzahl von Druckausgleichsöffnungen von einem einzigen Verschlussmittel verschlossen ist. Das Verschlussmittel erstreckt sich dazu entweder, wie bei dem voranbeschriebenen Ausführungsbeispiel mit den siebartigen Druckausgleichsöffnungen, flächig über die gesamte Mehrzahl der Druckausgleichsöffnungen und ist in den Zwischenbereichen oder lediglich in den Randbereichen mit dem Gehäuse verbunden, so dass diese Verbindung durch den durch die Druckausgleichsöffnungen auf das Verschlussmittel wirkenden Druck, insbesondere die daraus resultierende Kraft, aufgetrennt wird. Vorzugsweise ist auch vorgesehen, dass das Verschlussmittel eine Vielzahl von Auswölbungen aufweist, die sich jeweils in eine Druckausgleichsöffnung erstrecken, so dass das Verschlussmittel zumindest teilweise in jede der vorhandenen Druckausgleichsöffnungen eingebracht ist.

Um das Ablösen des Verschlussmittels auf vorteilhafte Weise sehr exakt einzustellen, ist gemäß einer weiteren Ausgestaltung vorgesehen, dass die Druckausgleichsöffnungen von einer Anzahl der Druckausgleichsöffnungen entsprechenden Anzahl an Verschlussmitteln verschlossen sind. Für jede Druckausgleichsöffnung ist folglich ein separates Verschlussmittel vorgesehen. Dabei ist auch vorgesehen, dass beispielsweise für jede Druckausgleichsöffnung eine separate Verbindung mit einer unterschiedlichen Verbindungskraft vorgesehen ist, so dass die verschiedenen Verschlussmittel in den unterschiedlichen Druckausgleichsöffnungen bei unterschiedlichen Innendruckschwellenwerten abgelöst werden.

Eine Ausgestaltung eines Durchflussmessgeräts mit einem Verschlussmittel, das insbesondere in einer Ausnehmung angeordnet ist, lässt sich gemäß einer weiteren Ausgestaltung besonders vorteilhaft dadurch realisieren, dass das Verschlussmittel als im Wesentlichen flache Scheibe ausgebildet ist. Folglich ist die Erstreckung des Verschlussmittels in zwei orthogonal zueinander angeordnete Richtungen einer Ebene größer als die Erstreckung des Verschlussmittels in die jeweils dritte, orthogonal dazu angeordnete Richtung. Das Verschlussmittel ist als flache Scheibe beispielsweise in einer entsprechenden Ausnehmung derart angeordnet, dass das Verschlussmittel mit der Oberfläche des Gehäuses eine ebene Fläche bildet. Die flache Scheibe ist beispielsweise mit einem Haftmittel auf der Oberfläche des Gehäuses befestigt, wobei das Haftmittel derart eingestellt ist, dass es sich bei Überschreiten eines vorbestimmten Innendruckschwellenwertes von dem Gehäuses und/oder von dem Verschlussmittel ablöst, so dass sich schlussendlich das Verschlussmittel von dem Gehäuse ablöst und die Druckausgleichsöffnung freigibt. Das Verschlussmittel wird stets zerstörungsfrei - ohne Zerstörung des Verschlussmittels - abgelöst.

Die Ablöseeigenschaften des Verschlussmittels vom Gehäuse lassen sich ferner dadurch einstellen, dass das Verschlussmittel als im Wesentlichen gewölbte Scheibe ausgebildet ist. Das Verschlussmittel als gewölbte Scheibe steht lediglich in einem ringartigen Randbereich mit dem Gehäuse in Verbindung, so dass dieser Bereich der Verbindung durch den Innendruck aufgetrennt werden muss. Dabei wird unterhalb der Wölbung der gewölbten Scheibe ein Druckraum ausgebildet, dessen Druck dem Innendruck im Innenvolumen des Gehäuses entspricht. Insbesondere kann durch die Form des Verschlussmittels als im Wesentlichen gewölbte Scheibe auch eine Bewegungsrichtung des Verschlussmittels beim Ablösen von dem Gehäuse vorgegeben werden. Vorteilhaft eignet sich eine solche Ausgestaltung bei der Anordnung des Verschlussmittels auf einer Innenfläche des Gehäuses, da mit der Wölbung das Heraustreten des Verschlussmittels durch die Druckausgleichsöffnung bei Überschreiten des Innendruckschwellenwertes gesteuert werden kann.

Das Verschlussmittel lässt sich vorteilhaft zumindest teilweise innerhalb der Druckausgleichsöffnung anordnen, wenn gemäß einer weiteren Ausgestaltung vorgesehen ist, dass das Verschlussmittel als im Wesentlichen länglich ausgestalteter Stopfen ausgebildet ist. Diese Form des Verschlussmittels ist eine besonders geeignete Form, um das Verschlussmittel in der Druckausgleichsöffnung anzuordnen. Das Verschlussmittel wird aus der Druckausgleichsöffnung herausgepresst, wenn der Innendruckschwellenwert überschritten wird, ansonsten bildet es mit der äußeren Oberfläche des Gehäuses, insbesondere auch mit der inneren Oberfläche des Gehäuses, eine ebene Fläche. Dazu ist das Verschlussmittel beispielsweise derart ausgestaltet, dass seine Länge der Stärke der Gehäusewand entspricht, so dass das Verschlussmittel die Druckausgleichsöffnung in der Wand des Gehäuses vollständig ausfüllt.

Die Druckausgleichsöffnung in einer Wand des Gehäuses des Durchflussmessgeräts lässt sich gemäß einer weiteren Ausgestaltung auf einfache Weise fertigen, wenn vorgesehen ist, dass die Druckausgleichsöffnung einen kreisrunden, ovalen oder vieleckigen Querschnitt, insbesondere einen quadratischen Querschnitt aufweist. Die vorgenannten Querschnitte sind mit den üblichen Herstellungsverfahren auf einfache Weise herzustellen und in die Wand des Gehäuses einbringbar. Des Weiteren haben sich diese Formen von Druckausgleichsöffnungen auch aus strömungstechnischer Hinsicht als besonders vorteilhaft herausgestellt, um beispielsweise bei einem ablaufenden Druckausgleich den Geräuschpegel zu reduzieren.

Die Erfindung wird durch die unabhängigen Ansprüche 1 und 2 definiert. In der Zeichnung zeigen:
- Fig. 1: ein Ausführungsbeispiel eines Durchflussmessgeräts in Seitenansicht,
- Fig. 2a - 2i: Ausführungsbeispiele von Verschlussmitteln,
- Fig. 3a, 3b: weitere Ausführungsbeispiele von Verschlussmitteln,
- Fig. 4a, 4b: Ausführungsbeispiele von Druckausgleichsöffnungen,
- Fig. 5a, 5b: weitere Ausführungsbeispiele von Druckausgleichsöffnungen, und
- Fig. 6a - 6c: Ausführungsbeispiele von Verschlussmitteln.

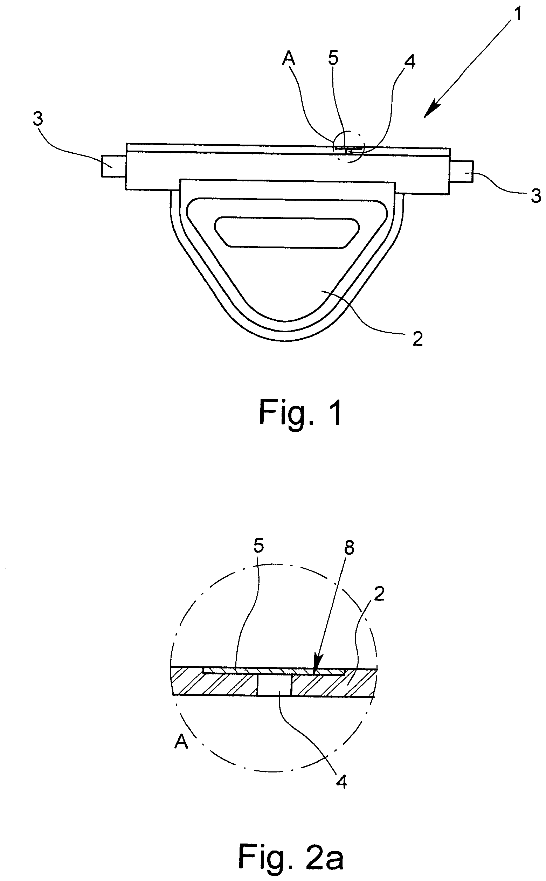

Fig. 1 zeigt ein Ausführungsbeispiel eines Durchflussmessgeräts 1 in Seitenansicht. Das Durchflussmessgerät 1 umfasst ein Gehäuse 2 und zwei Messrohre 3 und ist als Coriolis-Massedurchflussmessgerät ausgestaltet. Die Messrohre 3 sind bei diesem Ausführungsbeispiel V-förmig gebogen und parallel zueinander angeordnet. Im Fig. 1 dargestellten oberen Bereich des Gehäuses 2 ist eine Druckausgleichsöffnung 4 angeordnet, die die Wand des Gehäuses 2 vollständig bis in den Innenraum des Gehäuses 2 durchtritt, so dass das Innenvolumen des Gehäuses 2 mit der Umgebung des Durchflussmessgerätes 1 durch die Druckausgleichsöffnung 4 verbunden ist. Die Druckausgleichsöffnung 4 ist mit einem Verschlussmittel 5 verschlossen. Zwischen dem Verschlussmittel 5 und dem Gehäuse 2 ist eine Verbindung ausgebildet, wobei die Verbindung durch die Wirkung des Innendrucks auf das Verschlussmittel 5 bei Erreichen eines vorbestimmten Innendruckschwellenwertes aufgetrennt wird, wodurch sich das Verschlussmittel 5 vom Gehäuse 2 ablöst.

Fig. 2a zeigt die Druckausgleichsöffnung 4 gemäß dem Ausschnitt A in Fig. 1 in vergrößerter Ansicht. Die Druckausgleichsöffnung 4 durchtritt die Wand des Gehäuses 2 vollständig. Es ist eine Verbindung - hier als Haftverbindung - zwischen dem Gehäuse 2 und dem Verschlussmittel 5 ausgebildet, die für den Fall, dass der Innendruck im Innenvolumen des Gehäuses einen Innendruckschwellenwert überschreitet, aufgetrennt wird.

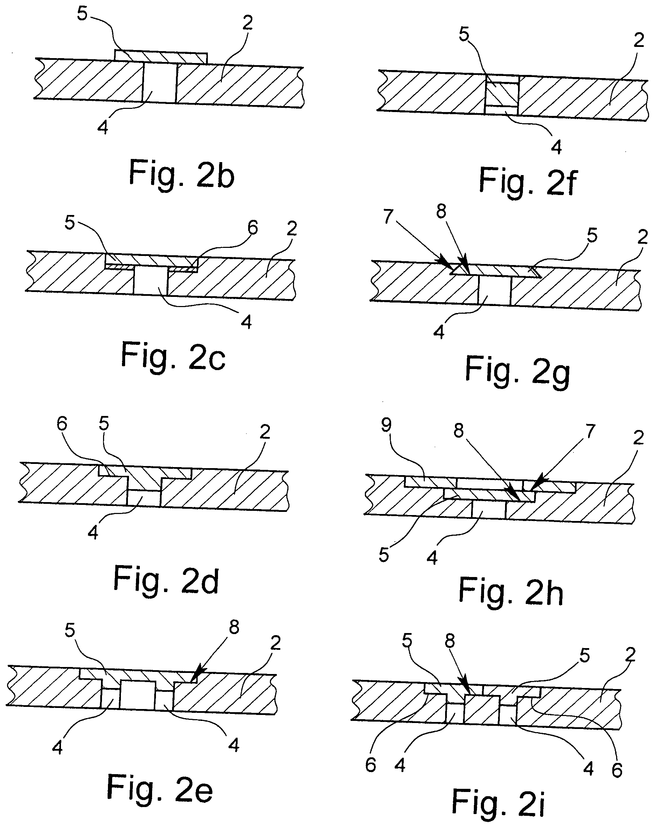

Fig. 2b bis 2i zeigen Ausführungsbeispiele von Verschlussmitteln, die an einem Gehäuse 2 eines Durchflussmessgeräts 1 angeordnet sind. Gemäß Fig. 2b ist das Verschlussmittel 5 als flache Scheibe ausgebildet und die Druckausgleichsöffnung 4 verschließend auf der äußeren Oberfläche des Gehäuses 2 angeordnet. Sobald der Druck im Innenvolumen des Gehäuses 2 und damit auch der Druck in der Druckausgleichsöffnung 4 einen vorbestimmten Innendruckschwellenwert überschreitet, wird das Verschlussmittel 5 vom Gehäuse abgelöst, indem die Verbindung zwischen Verschlussmittel 5 und Gehäuse 2 aufgetrennt wird.

Fig. 2c zeigt ein Ausführungsbeispiel eines Verschlussmittels 5, das ebenfalls als im Wesentlichen flache Scheibe ausgebildet ist und das mit einem Haftmittel 6 am Gehäuse 2 befestigt ist. Das Haftmittel 6 bildet in diesem Fall die Verbindung zwischen Verschlussmittel 5 und Gehäuse 2, wobei das Haftmittel 6 derart eingestellt ist, dass es zerstört wird, wenn der Innendruckschwellenwert erreicht wird. Das Haftmittel 6 ist bei diesem Ausführungsbeispiel im Vergleich zu den anderen Figuren besonders deutlich dargestellt.

Fig. 2g zeigt ein Ausführungsbeispiel eines Verschlussmittels 5, das in einem am Gehäuse 2 ausgebildeten Hinterschnitt 7 angeordnet ist und von diesem Hinterschnitt 7 formschlüssig gehalten wird. Sobald der Innendruck im Innenvolumen des Gehäuses 2 einen vorbestimmten Innendruckschwellenwert überschreitet, verformt sich das Verschlussmittel 5 derart flexibel, das es aus der formschlüssigen Halterung des Hinterschnitts 7 ausweicht, sich vom Gehäuse 2 ablöst und somit die Druckausgleichsöffnung 4 freigibt. Die Verschlussmittel 5 gemäß den Ausführungsbeispielen in den Fig. 2c, 2d, 2e, 2g und 2i sind derart in einer Ausnehmung 8 innerhalb des Gehäuses 2 angeordnet, dass das Verschlussmittel 5 mit der Oberfläche des Gehäuses 2 eine ebene Fläche bildet.

Fig. 2d zeigt ein Ausführungsbeispiel eines Verschlussmittels 5, das ebenfalls mit der äußeren Oberfläche des Gehäuses 2 eine ebene Fläche bildet, indem das Verschlussmittel 5 in eine Ausnehmung 8 eingebracht ist. Das Verschlussmittel 5 ist teilweise in der Druckausgleichsöffnung 4 angeordnet, so dass sich bei diesem Ausführungsbeispiel eine formschlüssige Verbindung - zumindest teilweise - zwischen Verschlussmittel 5 und dem Gehäuse 2, insbesondere der Druckausgleichsöffnung 4, ergibt. Zwischen dem Kopfbereich des Verschlussmittels 5 und der Ausnehmung 8 im Gehäuse 2 ist ferner eine dünne Schicht eines Haftmittels 6 aufgebracht, die die Verbindung um einen stoffschlüssigen Anteil ergänzt.

Fig. 2e zeigt ein Ausführungsbeispiel eines einzigen Verschlussmittels 5, das zwei Druckausgleichsöffnungen 4 gleichzeitig verschließt. Die Druckausgleichsöffnungen 4 sind nebeneinander angeordnet, wobei das Verschlussmittel 5 in jede der Druckausgleichsöffnungen 4 teilweise eingebracht ist.

Fig. 2f zeigt ein Ausführungsbeispiel eines Verschlussmittels 5, das vollständig in die Druckausgleichsöffnung 4 eingebracht ist. Die Verbindung zwischen Verschlussmittel 5 und Druckausgleichsöffnung 4 ist bei diesem Ausführungsbeispiel ausschließlich kraftschlüssig ausgebildet, so dass das Verschlussmittel 5 aus der Druckausgleichsöffnung 4 herausgedrückt wird, sobald der Innendruckschwellenwert, der auf die Fläche des Verschlussmittels 5 wirkt, die Haftreibung zwischen Verschlussmittel 5 und Druckausgleichsöffnung 4, insbesondere dem Gehäuse 2, überschreitet. Die Oberflächen sind dabei derart angepasst und die Materialien derart ausgewählt, dass ein Ablösen bei einem gewünschten lnnendruckschwellenwert erfolgt. Das Verschlussmittel 5 ist hier als im Wesentlichen länglicher Stopfen ausgebildet.

Fig. 2h zeigt ein weiteres Ausführungsbeispiel eines Verschlussmittels 5, das formschlüssig von einem Hinterschnitt 7 im Gehäuse gehalten wird. Der Hinterschnitt 7 ist bei diesem Ausführungsbeispiel nicht wie bei dem Ausführungsbeispiel gemäß Fig. 2g einstückig mit dem Gehäuse ausgebildet, sondern ist durch einen an dem Gehäuse 2 befestigten Ring 9 ausgebildet, der das Verschlussmittel 5 formschlüssig hält. Bei Überschreiten des Innendruckschwellenwerts verformt sich das Verschlussmittel 5 plastisch und löst sich aus der formschlüssigen Verbindung mit dem Hinterschnitt 7, so dass die Druckausgleichsöffnung 4 freigegeben wird.

Fig. 2i zeigt ein Ausführungsbeispiel, bei dem eine der Anzahl der Druckausgleichsöffnungen 4 entsprechende Anzahl an Verschlussmitteln 5 vorhanden ist, die die Druckausgleichsöffnungen 4 verschließen. Die Verschlussmittel 5 sind identisch ausgestaltet und die Verbindungen zwischen Verschlussmitteln 5 und Gehäuse 2 sind ebenfalls identisch, weisen also eine identische Haltekraft auf. Die Verbindung weist auch bei diesem Ausführungsbeispiel eine stoffschlüssige Komponente - durch die Haftschicht 6 - und eine kraftschlüssige Komponente - durch das teilweise Einbringen in die Druckausgleichsöffnung 4- auf.

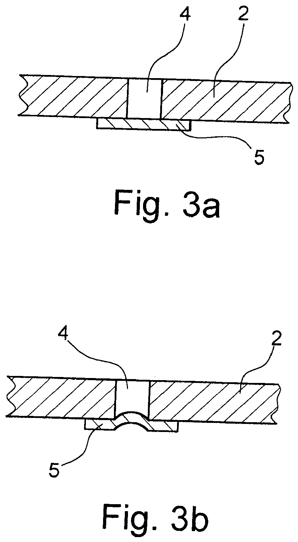

Fig. 3a zeigt ein Ausführungsbeispiel mit einem Verschlussmittel 5, das auf einer Innenfläche des Gehäuses 2 angeordnet ist. Bei einem vorbestimmten lnnendruckschwellenwert innerhalb des Innenvolumens des Gehäuses 2 wird das Verschlussmittel 5 plastisch verformt, hebt sich dadurch von der Innenfläche des Gehäuses 2 ab und wird durch die Druckausgleichsöffnung 4 nach außen herausgedrückt. Diese Ausgestaltung hat den Vorteil, dass ein unbeabsichtigtes Ablösen des Verschlussmittels 5 verhindert wird.

Fig. 3b zeigt ein weiteres Ausführungsbeispiel, bei dem das Verschlussmittel 5 auf der Innenfläche im Innenvolumen des Gehäuses 2 angeordnet ist. Das Verschlussmittel 5 ist als im Wesentlichen gewölbte Scheibe ausgebildet, wobei die Wölbung des Verschlussmittels 5 in die Druckausgleichsöffnung 4 hineinragt, so dass bei Überschreiten des Innendruckschwellenwertes die plastische Verformung des Verschlussmittels 5 durch die Wölbung gerichtet erfolgt, wobei das Verschlussmittel 5 anschließend durch den Innendruck aus der Druckausgleichsöffnung 4 herausgedrückt wird.

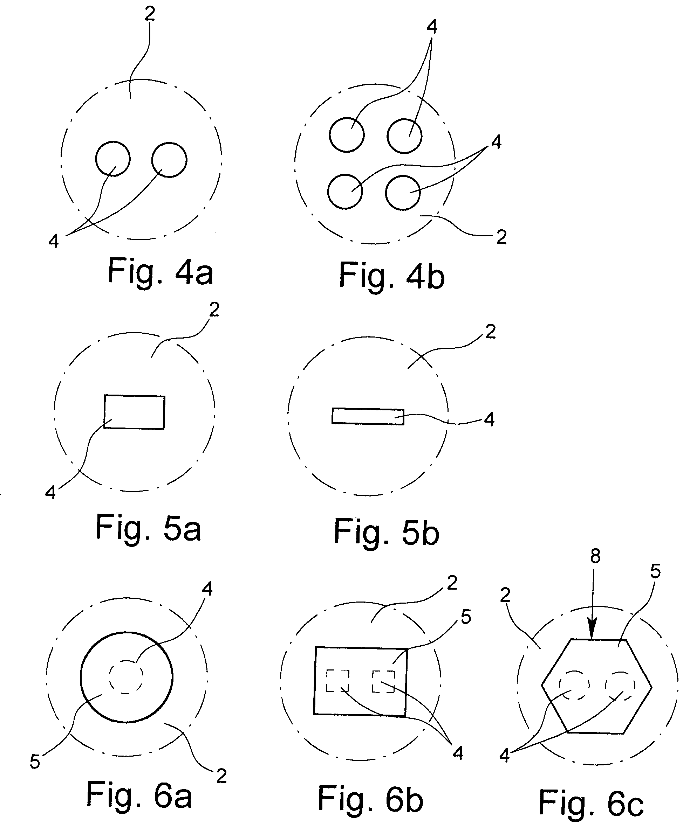

Fig. 4a zeigt ein Ausführungsbeispiel mit einer Mehrzahl con Druckausgleichsöffnungen 4 in einem Gehäuse 2. Das Gehäuse 2 ist als Ausschnitt dargestellt. Die beiden Druckausgleichsöffnungen 4 sind kreisrund ausgestaltet und nebeneinander in das Gehäuse 2 eingebracht. Fig. 4b zeigt ein Ausführungsbeispiel mit vier nebeneinander angeordneten, kreisrunden Druckausgleichsöffnungen 4, die in ein Gehäuse 2 eingebracht sind.

Fig. 5a zeigt ein Ausführungsbeispiel einer rechteckigen Druckausgleichsöffnung 4 in einem Gehäuse 2. Das Gehäuse 2 ist als Ausschnitt dargestellt. Fig. 5b zeigt ein weiteres Ausführungsbeispiel einer rechteckigen Druckausgleichsöffnung 4 in einem Gehäuse 2, wobei die Druckausgleichsöffnung 4 der Fig. 5b im Vergleich zur Druckausgleichsöffnung 4 der Fig. 5a flacher ausgestaltet ist.

Fig. 6a zeigt ein Ausführungsbeispiel eines Verschlussmittels 5, das als kreisrunde Scheibe ausgebildet ist und die Druckausgleichsöffnung 4 verschließend am Gehäuse 2 angeordnet ist und mit dem Gehäuse 2 verbunden ist. Sowohl die Druckausgleichsöffnungen 4 als auch das Verschlussmittel 5 sind in ihrem Querschnitt kreisrund ausgebildet.

Fig. 6b zeigt ein Ausführungsbeispiel eines Verschlussmittels 5, das einen im Wesentlichen rechteckigen Querschnitt aufweist, wobei das im Wesentlichen rechteckige Verschlussmittel 5 zwei quadratische Druckausgleichsöffnungen 4 im Gehäuse 2 verschließt.

Fig. 6c zeigt ein Ausführungsbeispiel eines Verschlussmittels 5 mit einem sechseckigen Querschnitt, wobei das Verschlussmittel 5 zwei nebeneinander angeordnete kreisrunde Druckausgleichsöffnungen 4 verschließt. Die Druckausgleichsöffnungen 4 sind nebeneinander angeordnet und werden von dem einzigen Verschlussmittel 5 verschlossen. Das Verschlussmittel 5 ist in einer Ausnehmung 8 im Gehäuse 2 angeordnet.

## Patentansprüche

1. Durchflussmessgerät (1), umfassend ein Gehäuse (2) und mindestens ein Messrohr (3), wobei das Gehäuse (2) ein Innenvolumen und mindestens eine Druckausgleichsöffnung (4) aufweist, wobei das Innenvolumen das Messrohr (3) zumindest teilweise umgibt, wobei die Druckausgleichsöffnung (4) mit einem Verschlussmittel (5) verschlossen ist, wobei zwischen dem Verschlussmittel (5) und dem Gehäuse (2) eine Verbindung ausgebildet ist,
**dadurch gekennzeichnet,**
**dass** die Verbindung so ausgestaltet ist, dass sie durch die Wirkung eines Innendrucks im Innenvolumen auf das Verschlussmittel (5) bei Erreichen eines vorbestimmten Innendruckschwellenwertes auftrennbar ist, so dass das Verschlussmittel (5) zerstörungsfrei vom Gehäuse (2) gelöst wird, und dass die Verbindung zumindest teilweise als stoffschlüssige Verbindung ausgestaltet ist.

2. Durchflussmessgerät (1), umfassend ein Gehäuse (2) und mindestens ein Messrohr (3), wobei das Gehäuse (2) ein Innenvolumen und mindestens eine Druckausgleichsöffnung (4) aufweist, wobei das Innenvolumen das Messrohr (3) zumindest teilweise umgibt, wobei die Druckausgleichsöffnung (4) mit einem Verschlussmittel (5) verschlossen ist, wobei zwischen dem Verschlussmittel (5) und dem Gehäuse (2) eine Verbindung ausgebildet ist,
**dadurch gekennzeichnet,**
**dass** die Verbindung so ausgestaltet ist, dass sie durch die Wirkung eines Innendrucks im Innenvolumen auf das Verschlussmittel (5) bei Erreichen eines vorbestimmten Innendruckschwellenwertes auftrennbar ist, so dass das Verschlussmittel (5) zerstörungsfrei vom Gehäuse (2) gelöst wird, und
**dass** die Verbindung zumindest teilweise als formschlüssige Verbindung ausgestaltet ist, dass das Gehäuse (2) einen Hinterschnitt (7) aufweist, und dass das Verschlussmittel (5) zumindest teilweise von dem Hinterschnitt (7) gehalten wird, wobei das Gehäuse (2) im Bereich der Druckausgleichsöffnung (4) einen Hinterschnitt (7) aufweist, der das Verschlussmittel zumindest teilweise umgreift oder übergreift, so dass wenn der Innendruck des Gehäuses den Innendruckschwellenwert erreicht, das Verschlussmittel flexibel verformt wird, wodurch es aus der Umgreifung des Hinterschnitts entweicht und die Druckausgleichsöffnung freigibt.

3. Durchflussmessgerät (1) nach Anspruch 1, **dadurch gekennzeichnet, dass** die Verbindung zumindest teilweise mit einem Haftmittel (6) realisiert ist, so dass das Haftmittel (6) bei einem vorbestimmten Innendruckschwellenwert zumindest teilweise zerstört wird.

4. Durchflussmessgerät (1) nach Anspruch 2, **dadurch gekennzeichnet, dass** die Verbindung zumindest teilweise als stoffschlüssige Verbindung ausgestaltet ist, bevorzugt die Verbindung zumindest teilweise mit einem Haftmittel (6) realisiert ist, so dass das Haftmittel (6) bei einem vorbestimmten Innendruckschwellenwert zumindest teilweise zerstört wird.

5. Durchflussmessgerät (1) nach einem der Ansprüche 1 bis 4, **dadurch gekennzeichnet, dass** die Verbindung zumindest teilweise als kraftschlüssige Verbindung ausgestaltet ist, bevorzugt das Verschlussmittel (5) zumindest teilweise in der Druckausgleichsöffnung (4) angeordnet ist, besonders bevorzugt vollständig in der Druckausgleichsöffnung (4) angeordnet ist.

6. Durchflussmessgerät (1) nach einem der Ansprüche 1 bis 5, **dadurch gekennzeichnet, dass** das Verschlussmittel (5) auf einer Oberfläche des Gehäuses (2) angeordnet ist.

7. Durchflussmessgerät (1) nach einem der Ansprüche 1 bis 6, **dadurch gekennzeichnet, dass** das Verschlussmittel (5) auf einer Innenfläche des Gehäuses (2) angeordnet ist, und dass bei einem vorbestimmten Innendruckschwellenwert das Verschlussmittel (5) flexibel durch die Druckausgleichsöffnung (4) nach außen entweicht.

8. Durchflussmessgerät (1) nach einem der Ansprüche 1 bis 7, **dadurch gekennzeichnet, dass** in dem Gehäuse (2) eine die Druckausgleichsöffnung (4) umgebende Ausnehmung (8) angeordnet ist, insbesondere dass das Verschlussmittel (5) zumindest teilweise in der Ausnehmung (8) angeordnet ist.

9. Durchflussmessgerät (1) nach einem der Ansprüche 1 bis 8, **dadurch gekennzeichnet, dass** eine Mehrzahl von Druckausgleichsöffnungen (4) vorgesehen ist.

10. Durchflussmessgerät (1) nach Anspruch 9, **dadurch gekennzeichnet, dass** die Mehrzahl von Druckausgleichsöffnungen (4) von einem einzigen Verschlussmittel (5) verschlossen ist.

11. Durchflussmessgerät (1) nach Anspruch 9, **dadurch gekennzeichnet, dass** die Druckausgleichsöffnungen (4) von einer der Anzahl der Druckausgleichsöffnungen (4) entsprechenden Anzahl an Verschlussmitteln (5) verschlossen sind.

12. Durchflussmessgerät (1) nach einem der Ansprüche 1 bis 11, **dadurch gekennzeichnet, dass** das Verschlussmittel (5) als im Wesentlichen flache Scheibe ausgebildet ist.

13. Durchflussmessgerät (1) nach einem der Ansprüche 1 bis 11, **dadurch gekennzeichnet, dass** das Verschlussmittel (5) als im Wesentlichen gewölbte Scheibe ausgebildet ist.

14. Durchflussmessgerät (1) nach einem der Ansprüche 1 bis 11, **dadurch gekennzeichnet, dass** das Verschlussmittel (1) als im Wesentlichen länglich ausgeprägter Stopfen ausgebildet ist.

15. Durchflussmessgerät (1) nach einem der Ansprüche 1 bis 14, **dadurch gekennzeichnet, dass** die Druckausgleichsöffnung (4) einen kreisrunden, ovalen oder vieleckigen Querschnitt, insbesondere einen quadratischen Querschnitt aufweist.

## Claims

1. Flow meter (1), comprising a housing (2) and at least one measuring tube (3), wherein the housing (2) has an internal volume and at least one pressure compensation opening (4), wherein the internal volume surrounds the measuring tube (3), at least in part, wherein the pressure compensation opening (4) is closed by a closure means (5), wherein a connection is formed between the closure means (5) and the housing (2)
**characterized in**
**that** the connection is designed such that it can be separated by the action of an internal pressure in the internal volume on the closure means (5) when a predetermined internal pressure threshold value is reached so that the closure means (5) is released from the housing (2) in a non-destructive manner, and that the connection is designed at least in part as an integral joint.

2. Flow meter (1), comprising a housing (2) and at least one measuring tube (3), wherein the housing (2) has an internal volume and at least one pressure compensation opening (4), wherein the internal volume surrounds the measuring tube (3), at least in part, wherein the pressure compensation opening (4) is closed by a closure means (5), wherein a connection is formed between the closure means (5) and the housing (2)
**characterized in**
**that** the connection is designed such that it can be separated by the action of an internal pressure in the internal volume on the closure means (5) when a predetermined internal pressure threshold value is reached so that the closure means (5) is released from the housing (2) in a non-destructive manner, and that the connection is designed at least in part as a positive connection, that the housing (2) has an undercut (7), and that the closure means (5) is retained by the undercut (7), at least in part, wherein the housing (2) has an undercut (7) in the area of the pressure compensation opening (4), which at least partially encompasses or overlaps the closure means, so that when the internal pressure of the housing reaches the internal pressure threshold, the closure means is flexibly deformed, whereby it escapes from the encompassment of the undercut and releases the pressure compensation opening.

3. Flow meter (1) according to claim 1, **characterized in that** the connection is implemented using an adhesive (6), at least in part, so that the adhesive (6) is at least partially destroyed at a predetermined internal pressure threshold value.

4. Flow meter (1) according to claim 2, **characterized in that** the connection is designed at least in part as an integral joint, preferably the connection is at least partially implemented with an adhesive (6) so that the adhesive (6) is at least partially destroyed at a predetermined internal pressure threshold value.

5. Flowmeter (1) according to any one of claims 1 to 4, **characterized in that** the connection is designed at least partially as a force-fit connection, preferably the closure means (5) is arranged, at least in part, in the pressure compensation opening (4), particularly preferably is arranged completely in the pressure compensation opening (4).

6. Flow meter (1) according to any one of claims 1 to 5, **characterized in that** the closure means (5) is arranged on a surface of the housing (2).

7. Flow meter (1) according to any one of claims 1 to 6, **characterized in that** the closure means (5) is arranged on an inner surface of the housing (2), and that the closure means (5) escapes outwardly through the pressure compensation opening (4) in a flexible manner at a predetermined internal pressure threshold value.

8. Flow meter (1) according to any one of claims 1 to 7, **characterized in that** a recess (8) surrounding the pressure compensation opening (4) is arranged in the housing (2), and in particular **in that** the closure means (5) is arranged at least in part in the recess (8).

9. Flow meter (1) according to any one of claims 1 to 8, **characterized in that** a plurality of pressure compensation openings (4) is provided.

10. Flow meter (1) according to claim 9, **characterized in that** the plurality of pressure compensation openings (4) is closed by a single closure means (5).

11. Flow meter (1) according to claim 9, **characterized in that** the pressure compensation openings (4) are closed by a number of closure means (5) corresponding to the number of pressure compensation openings (4).

12. Flow meter (1) according to any one of claims 1 to 11, **characterized in that** the closure means (5) is formed as a substantially planar disk.

13. Flow meter (1) according to any one of claims 1 to 11, **characterized in that** the closure means (5) is formed as a substantially curved disk.

14. Flow meter (1) according to any one of claims 1 to 11, **characterized in that** the closure means (5) is formed as a substantially elongate plug.

15. Flow meter (1) according to any one of claims 1 to 14, **characterized in that** the pressure compensation opening (4) has a circular, oval or polygonal cross section, in particular a square cross section.

## Revendications

1. Débitmètre (1) comprenant un boîtier (2) et au moins un tube de mesure (3), le boîtier (2) comportant un volume intérieur et au moins une ouverture de compensation de pression (4), le volume intérieur entourant au moins partiellement le tube de mesure (3), l'ouverture de compensation de pression (4) étant fermée par un moyen de fermeture (5), une liaison étant établie entre le moyen de fermeture (5) et le boîtier (2),
**caractérisé en ce que**
la liaison est conçue de manière à pouvoir être séparée par l'action d'une pression interne dans le volume intérieur sur le moyen de fermeture (5) lorsqu'un seuil de pression interne prédéterminé est atteint, de sorte que le moyen de fermeture (5) soit détaché du boîtier (2) de manière non destructive, et
la liaison est conçue au moins partiellement comme une liaison de matière.

2. Débitmètre (1) comprenant un boîtier (2) et au moins un tube de mesure (3), le boîtier (2) comporte un volume intérieur et au moins une ouverture de compensation de pression (4), le volume intérieur entourant au moins partiellement le tube de mesure (3), l'ouverture de compensation de pression (4) étant fermée par un moyen de fermeture (5), une liaison étant établie entre le moyen de fermeture (5) et le boîtier (2),
**caractérisé en ce que**
la liaison est établie de manière à pouvoir être séparée par l'action d'une pression interne dans le volume intérieur sur le moyen de fermeture (5) lorsqu'un seuil de pression interne prédéterminé est atteint de sorte que le moyen de fermeture (5) soit détaché du boîtier (2) de manière non destructive, et
la liaison est conçue au moins partiellement comme une liaison par complémentarité de formes,
le boîtier (2) présente une dépouille (7) et
le moyen de fermeture (5) est maintenu au moins partiellement par la dépouille (7), le boîtier (2) comportant dans la région de l'ouverture de compensation de pression (4) une dépouille (7) qui entoure ou recouvre au moins partiellement le moyen de fermeture de sorte que, lorsque la pression interne du boîtier atteint le seuil de pression interne, le moyen de fermeture se déforme de manière flexible, ce qui le désengage de la dépouille et libère l'ouverture de compensation de pression.

3. Débitmètre (1) selon la revendication 1, **caractérisé en ce que** la liaison est établie au moins partiellement avec un adhésif (6) de sorte que l'adhésif (6) soit au moins partiellement détruit à un seuil de pression interne prédéterminé.

4. Débitmètre (1) selon la revendication 2, **caractérisé en ce que** la liaison est au moins partiellement conçue comme une liaison de matière, de préférence la liaison est établie au moins partiellement avec un adhésif (6) de sorte que l'adhésif (6) est au moins partiellement détruit à un seuil de pression interne prédéterminé.

5. Débitmètre (1) selon l'une des revendications 1 à 4, **caractérisé en ce que** la liaison est conçue au moins partiellement comme une liaison en force, de préférence le moyen de fermeture (5) est disposé au moins partiellement dans l'ouverture de compensation de pression (4), de manière particulièrement préférée entièrement dans l'ouverture de compensation de pression (4).

6. Débitmètre (1) selon l'une des revendications 1 à 5, **caractérisé en ce que** le moyen de fermeture (5) est disposé sur une surface du boîtier (2).

7. Débitmètre (1) selon l'une des revendications 1 à 6, **caractérisé en ce que** le moyen de fermeture (5) est disposé sur une surface intérieure du boîtier (2), et **en ce que** le moyen de fermeture (5) est dégagé vers l'extérieur de manière flexible par l'ouverture de compensation de pression (4) à un seuil de pression interne prédéterminé.

8. Débitmètre (1) selon l'une des revendications 1 à 7, **caractérisé en ce qu'**un évidement (8), entourant l'ouverture de compensation de pression (4), est ménagé dans le boîtier (2), en particulier **en ce que** le moyen de fermeture (5) est disposé au moins partiellement dans l'évidement (8).

9. Débitmètre (1) selon l'une des revendications 1 à 8, **caractérisé en ce qu'**il est prévu une pluralité d'ouvertures de compensation de pression (4).

10. Débitmètre (1) selon la revendication 9, **caractérisé en ce que** la pluralité d'ouvertures de compensation de pression (4) est fermée par un moyen de fermeture unique (5).

11. Débitmètre (1) selon la revendication 9, **caractérisé en ce que** les ouvertures de compensation de pression (4) sont fermées par un certain nombre de moyens de fermeture (5) correspondant au nombre d'ouvertures de compensation de pression (4).

12. Débitmètre (1) selon l'une des revendications 1 à 11, **caractérisé en ce que** le moyen de fermeture (5) est conçu comme un disque sensiblement plat.

13. Débitmètre (1) selon l'une des revendications 1 à 11, **caractérisé en ce que** le moyen de fermeture (5) est conçu comme un disque sensiblement incurvé.

14. Débitmètre (1) selon l'une des revendications 1 à 11, **caractérisé en ce que** le moyen de fermeture (1) est conçu comme un bouchon sensiblement allongé.

15. Débitmètre (1) selon l'une des revendications 1 à 14, **caractérisé en ce que** l'ouverture de compensation de pression (4) a une section transversale circulaire, ovale ou polygonale, en particulier une section transversale carrée.
